Europäisches Patentamt

European Patent Office

Office européen des brevets

(19)

(11) Numéro de publication : **0 013 638**
**B1**

(12) **FASCICULE DE BREVET EUROPÉEN**

(45) Date de publication du fascicule du brevet :
13.07.83

(51) Int. Cl.³ : **B 29 D 31/00**

(21) Numéro de dépôt : 80400008.1

(22) Date de dépôt : 03.01.80

(54) Procédé pour l'extrusion d'une gaine thermoplastique sous forme d'un film tubulaire pourvu de perforations et dispositif pour la mise en oeuvre du procédé.

(30) Priorité : 03.01.79 FR 7900089

(43) Date de publication de la demande :
23.07.80 Bulletin 80/15

(45) Mention de la délivrance du brevet :
13.07.83 Bulletin 83/28

(84) Etats contractants désignés :
BE CH DE GB IT NL

(56) Documents cités :
FR A 2 144 606
FR A 2 203 703

(73) Titulaire : **Société d'Application de Matériel pour l'Extrusion « S.A.M.E.X. »**
56, rue du Léon
F-78130 Maurepas (FR)

(72) Inventeur : **Hureau, Jean-Claude**
56, rue du Léon
F-78310 Maurepas (FR)
Inventeur : **Hureau, Jacques**
F-72600 Saint Remy Des Monts (FR)
Inventeur : **Gaillard, Hubert**
182, avenue Rouget de l'Isle
F-94400 Vitry Sur Seine (FR)

(74) Mandataire : **Derambure, Christian**
**Cabinet BUGNION ASSOCIES SARL**
116, boulevard Haussmann
F-75008 Paris (FR)

Procédé pour l'extrusion d'une gaine thermoplastique sous forme d'un film tubulaire pourvu de perforations et dispositif pour la mise en œuvre de procédé

La présente invention concerne un procédé, et un dispositif pour la mise en œuvre de ce procédé, permettant l'extrusion d'une gaine d'un matériau synthétique, et plus particulièrement thermoplastique, sous forme d'un fil de faible épaisseur et de structure tubulaire. L'invention est plus particulièrement destinée à la réalisation d'un tel film tubulaire présentant une paroi perforée soit dans sa totalité soit au moins sur une partie de ladite paroi.

L'extrusion de films tubulaires à partir d'une matière synthétique, notamment thermoplastique, de faible épaisseur, permet de réaliser par tronçonnage et thermosoudure transversale ultérieure, des sacs, conteneurs, emballages dont l'usage est extrêmement répandu et la consommation très importante notamment au niveau de la distribution des produits de consommation courante.

L'extrusion de tels films tubulaires est réalisée à partir de filières d'extrusion circulaires, alimentées en matière à l'état thermoplastique par une extrudeuse, et débitant le tube de matière synthétique soumis ensuite à refroidissement.

On connaît des procédés et des dispositifs, tels que décrits dans le brevet FR-2 203 703, permettant l'extrusion de gaines tubulaires de structure lacunaire, par perforation pneumatique d'un film, au sortir de l'extrudeuse, le film passant sur une jupe tronconique pourvue de canaux par lesquels de l'air chaud est insufflé pour provoquer les perforations sur les films tubulaires.

Il est cependant souhaitable dans de nombreux cas de pouvoir disposer d'une gaine de matière synthétique comportant une paroi lacunaire et pourvue de perforations, alternant avec des plages formant une partie de la paroi selon une surface continue.

Une telle gaine sera avantageusement utilisée pour la réalisation de sacs ou conteneurs perforés permettant ainsi l'aération du produit contenu ; cependant, la présence de bandes ou plages soit transversales soit longitudinales prévues sur la gaine et offrant une surface continue permettra par exemple de réaliser des zones renforcées aptes à constituer des anses de préhension pour le sac constituant le produit final ; de telles bandes peuvent également être prévues pour l'apposition d'impression permettant un affichage publicitaire ou informatif du produit contenu. Ces plages continues concourent avantageusement à renforcer la résistance mécanique de l'ensemble du sac ou conteneur.

Des dispositifs connus, tels que décrits dans le brevet FR-2 203 703, permettent de former sur des parties de la gaine une paroi de surface continue au moyen d'un distributeur, associé à la chambre pneumatique communiquant avec les canaux, apte à obturer de façon intermittente les canaux. Mais avec de tels dispositifs, dans ces parties, la matière, immédiatement au sortir de la filière et encore à l'état ramolli, vient adhérer aux parois du conformateur et ne permet donc pas le débit régulier de l'ensemble de la gaine.

L'invention vise à remédier à ces inconvénients et permet d'extruder une gaine sous forme de film tubulaire comportant des zones ou plages perforées alternant avec des zones offrant une surface continue, sans qu'il y ait adhérence du film ramolli sur la paroi du conformateur.

L'invention concerne un procédé pour l'extrusion d'une gaine de matière thermoplastique formant un film tubulaire comportant des zones perforées, du type dans lequel le film venu d'extrusion et encore à l'état plastique est amené sur une jupe traversée de canaux répartis sur son pourtour et communiquant avec une chambre intérieure contenant un gaz sous pression, une partie des canaux permettant d'insuffler de façon intermittente des premiers jets de gaz tel que de l'air chaud avec des caractéristiques physiques, telles que la pression ou le débit, permettant de provoquer la perforation des zones du film destinées à être perforées, procédé caractérisé en ce qu'une autre partie des canaux est prévue pour insuffler de façon intermittente des seconds jets de gaz ou d'air avec des caractéristiques physiques inférieures et telles que ces jets laissent pleines des zones du film destinées à rester pleines, ces seconds jets insufflant de l'air venant occuper l'interface entre le film et la paroi extérieure de la jupe, ce coussin d'air évitant le contact entre le film et ladite paroi, permettant ainsi l'écoulement du film continu le long de cette paroi.

L'invention concerne également un dispositif pour la mise en œuvre de ce procédé et pour l'extrusion d'une gaine de matière thermoplastique sous forme d'un film tubulaire comportant des plages ou parois prévues avec des perforations, alternant avec des plages ou parois formant une surface continue ; le dispositif comporte une tête d'extrusion, dirigée vers le bas et permettant la sortie d'un film tubulaire étiré vers le bas, le noyau intérieur de la tête d'extrusion étant prolongé à sa périphérie par une jupe tronconique formant conformateur de dilatation dudit film tubulaire, et le noyau intérieur comporte lui-même intérieurement une chambre alimentée en air comprimé amené à la température appropriée, la jupe comportant des canaux communiquant avec ladite chambre pneumatique intérieure et débouchant sur la paroi périphérique de ladite jupe immédiatement en aval de la fente d'extrusion et à la sortie du film, la chambre intérieure étant associée à un distributeur apte à obturer de façon intermittente lesdits canaux, le dispositif étant caractérisé en ce qu'une partie des canaux ou canaux de perforation sont prévus avec un diamètre supérieur à celui des autres canaux ou canaux de coussin d'air, et les canaux de perforation sont aptes à débiter un jet d'air provoquant la perforation du film, tandis que les canaux de coussin d'air sont aptes à débiter un jet d'air de caractéristiques mécaniques inférieures aux jets débités par les canaux de perforation et ne provoquant pas la perforation du film, cet air formant coussin entre le film et la paroi de la jupe, en facilitant l'écoulement de film sur la jupe.

De préférence, le rapport des diamètres des premiers canaux aux diamètres des seconds canaux est compris entre 1,5 et 3 et, de préférence voisin de 2.

Selon un autre développement du procédé de l'invention, on utilise une jupe formant conformateur de dilatation du film venu d'extrusion et ladite jupe comporte une pluralité de canaux de perforation et de canaux de coussin d'air répartis régulièrement sur sa périphérie, lesdits canaux débouchant au niveau de la formation du film venu d'extrusion, la jupe constituant ainsi un noyau standard et indifférencié permettant l'extrusion d'un film tubulaire perforé sur l'ensemble de sa paroi, et on obture les canaux de perforation dans les zones où l'on souhaite prévoir la formation d'une paroi pleine, seuls les canaux de formation du coussin d'air étant laissés actifs dans cette zone les canaux de perforation obturés et ainsi neutralisés dans lesdites zones destinées à l'extrusion de plages selon une surface continue.

L'invention concerne également une filière standard apte à permettre la mise en œuvre des procédés ci-dessus.

Dans cette filière, les canaux de perforation et les canaux de coussin d'air sont répartis alternativement à sa périphérie selon des intervalles réguliers.

D'autres caractéristiques et avantages de l'invention ressortiront encore de la description qui suit et qui est donnée en rapport avec des formes de réalisation préférentielles présentées à titre d'exemple non limitatif et en se référant aux dessins annexés.

La figure 1 représente une vue d'une filière ou tête d'extrusion dans laquelle une chambre pneumatique intérieure est en communication avec la surface de la jupe sur laquelle passe le film tubulaire par un dispositif de distribution intermittente des filets d'air, pour l'obturation du film ;

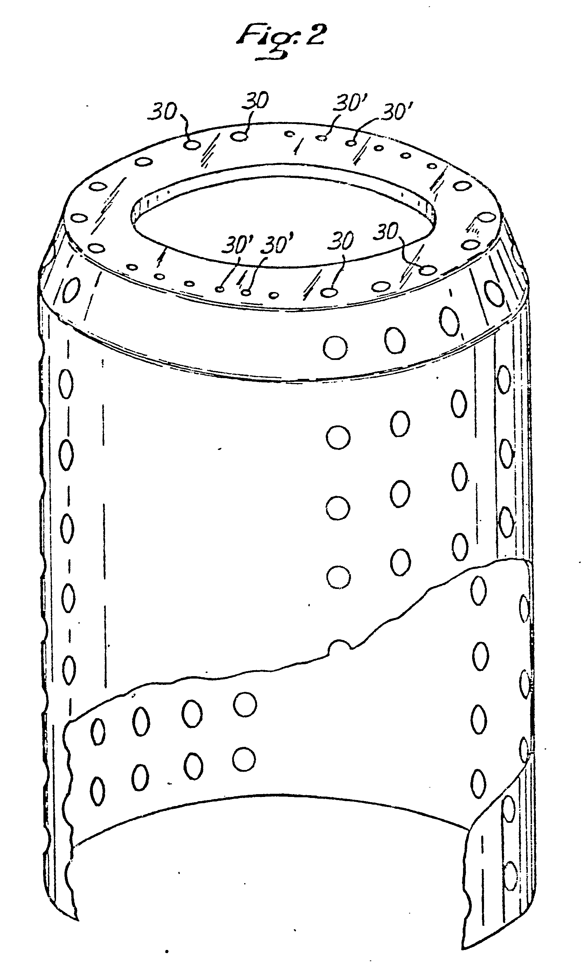

la figure 2 représente une vue en perspective d'une jupe munie de canaux de perforation et de canaux de coussin d'air débitant un film partiellement perforé ;

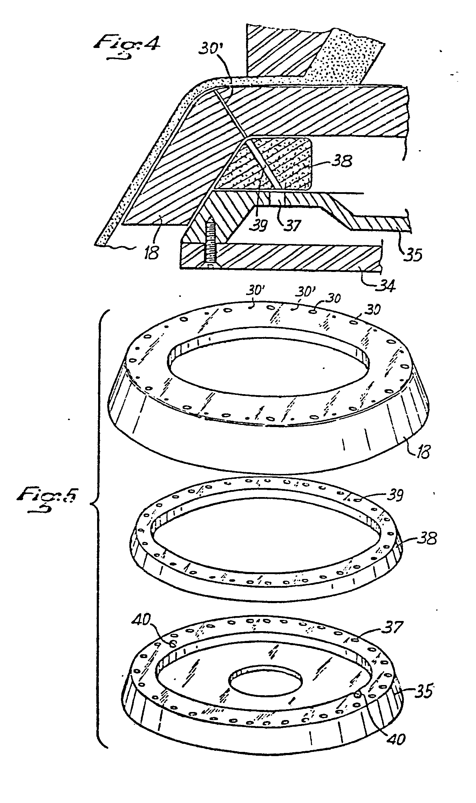

la figure 3 représente une vue agrandie du détail de la jupe selon la figure 1, au niveau d'un canal de perforation ;

la figure 4 représente une vue agrandie du détail de la jupe selon la figure 1, au niveau d'un canal de coussin d'air ;

la figure 5 représente une vue en perspective éclatée d'une jupe et son distributeur conformément à l'invention.

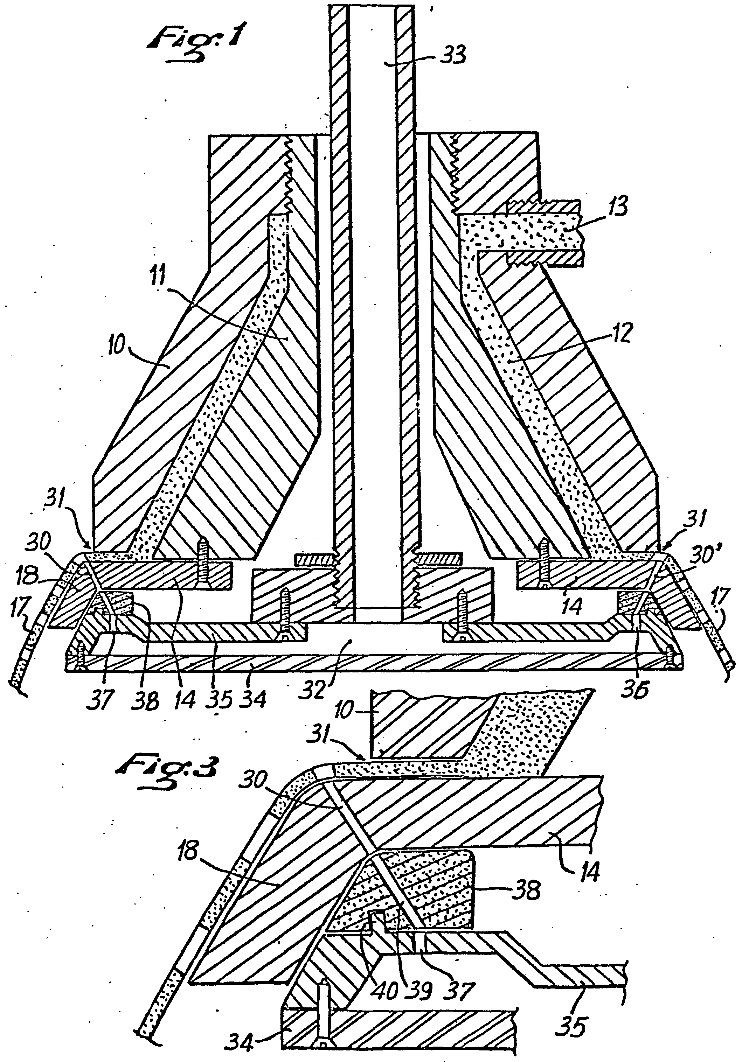

La figure 1 représente une tête d'extrusion selon une première forme de réalisation de l'invention.

La tête d'extrusion comporte ici un élément extérieur 10 associé à un noyau intérieur 11 tous deux de forme générale tronconique et séparés de façon à laisser subsister entre eux une chambre 12 alimentée en 13 en matière synthétique à l'état plastique par une extrudeuse ou boudineuse (non représentée aux dessins).

Le noyau central 11 comporte à son extrémité inférieure une couronne 14 dont la face supérieure 15 délimite avec le bord inférieur 16 de l'élément 10 la filière circulaire (31) permettant l'extrusion, par le passage d'un film de matière synthétique formant la gaine 17.

La couronne d'extrusion 14 appartenant au noyau intérieur est prolongée à sa périphérie par une paroi ou jupe tronconique 18 sur laquelle glisse le film gaine 17, cette jupe 18 constituant un conformateur de dilatation de la gaine à l'état plastique au sortir de la filière d'extrusion.

La couronne 14 constituant le noyau central de la filière comporte des canaux 30, 30' débouchant immédiatement en aval de la fente 31 formant filière d'extrusion et ces canaux 30, 30' sont alimentés en air sous pression et amenés à la température appropriée par un dispositif de distribution situé sous la couronne 14 et à l'intérieur de la jupe 18 de conformation de la gaine venue d'extrusion.

Ce dispositif de distribution comporte une chambre 32 communiquant par la tubulure 33 avec une source d'air comprimé (non représentée aux dessins).

La chambre 32 est définie par le disque inférieur 34 et la plaquette circulaire 35, l'ensemble étant solidaire de la tubulure 33 ; cette dernière étant entraînée en rotation par un dispositif (non représenté aux dessins).

A sa périphérie la plaquette curculaire 35 comporte des canaux pour le passage de l'air comprimé vers les canaux 30, 30' de la couronne d'extrusion 14.

Les canaux 36, 37 de la plaquette 35, du fait de la rotation régulière de cette plaque sont amenés à intervalle régulier en concordance avec les canaux 30, 30' et permettent ainsi l'alimentation intermittente de ces derniers pendant la période de concordance.

Cependant, les expérimentations et essais auxquels il a été procédé par le Demandeur ont permis de constater qu'il n'était pas possible d'obtenir un fonctionnement régulier et fiable de la plaquette de distribution 35 en contact étanche avec la couronne 14.

En effet, la couronne 14 doit être maintenue à une température suffisamment élevée (de l'ordre de 200 à 250 °C) de façon à permettre l'écoulement de la matière synthétique en fusion sans refroidissement prématuré qui risquerait d'obturer la filière ou fente d'extrusion 31.

Le contact de deux surfaces métalliques en rotation l'une sur l'autre et à une température ne peut se prolonger sans entraîner rapidement une rapide dégradation de l'état de surface de l'une des deux pièces ou des deux, malgré les traitements spéciaux que ces pièces peuvent subir.

Pour remédier à cet inconvénient, on utilise une bague intermédiaire 38 en matière solide autolubrifiante et à faible coefficient de frottement, réalisée de préférence en graphite.

Mais, cette bague pourrait également être réalisée en matériau synthétique tel qu'une résine fluorée ou une résine polyimide.

La bague 38 en graphite est elle-même traversée par une série de canaux 39, chaque canal 39 venant en concordance avec un canal inférieur circulaire traversant la plaquette circulaire 35 et prolongeant ce canal 36 ou 37.

Le positionnement correct de la bague de graphite 38 est obtenu par un système de plots ou ergots 40 prévus sur la plaquette circulaire 35 et pénétrant dans un logement récepteur prévu sur la face inférieure de la bague de graphite 38 ; on s'assure ainsi du positionnement correct de la bague sur la plaquette et de la mise en concordance rigoureuse des canaux 39 de la bague de graphite 38 par rapport aux canaux 37 de la plaquette.

Dans ces conditions, l'ensemble constitué par la plaquette 35 et sa bague graphitée et le disque inférieur 34 et conformant la chambre de distribution peut être entraîné en rotation de façon régulière en venant porter dans l'angle inférieur de la couronne 14 constituant le noyau central de la filière.

La bague graphitée permet à cet effet de jouer un rôle de joint d'étanchéité entre la chambre 32 et la face intérieure de la couronne 14 d'où partent les canaux d'insufflation des filets d'air 30. Cette bague assure une étanchéité parfaite et fiable, ce qui permet d'obtenir la distribution régulière des filets d'air injectés à travers la couronne 14. Cette bague graphitée assure outre son rôle de joint d'étanchéité un rôle d'élément lubrifiant permettant l'autolubrification permanente des deux surfaces en contact de rotation. Cette bague graphitée joue un rôle d'écran permettant une isolation thermique entre la couronne 14 formant le noyau intérieur central de la filière et la chambre de distribution d'air comprimé 32 en permettant ainsi le maintien de ces deux éléments coopérant pour assurer la distribution régulière des filets d'air à travers les canaux 30.

Selon l'invention les canaux disposés à la périphérie de la couronne 14, ou sur la jupe 18 sont prévus de deux types.

Une série de premiers canaux est prévue avec des caractéristiques telles que les jets d'air distribués par ces canaux perforent pneumatiquement le film encore ramolli et venu d'extrusion ; ces premiers canaux sont donc des canaux de perforation destinés à réaliser au moins dans certaines zones du film des ouvertures afin de créer des plages aérées, par exemple pour obtenir des emballages où les produits doivent être maintenus à l'air libre.

La couronne 14 formant le noyau central de la filière ou la jupe 18 comporte également une série de seconds canaux dont les caractéristiques sont telles que les jets d'air distribués par ces seconds canaux ne sont pas suffisants pour assurer la perforation du film venu d'extrusion et ces jets d'air sont destinés à former un coussin d'air entre le film à l'état ramolli et la surface extérieure de la jupe 18.

On peut ainsi, en disposant convenablement les premiers canaux (ou canaux de perforation) et les seconds canaux (ou canaux de formation du coussin d'air) sur la périphérie de la couronne centrale d'extrusion 14 ou sur la jupe 18 et en réglant avantageusement le régime de distribution des jets d'air dans ces canaux obtenir la formation à la surface du film venu d'extrusion de plages perforées alternant avec des plages dans lesquelles le film offre une surface continue.

On peut ainsi réaliser des emballages, sacs, conditionnements comportant une structure lacunaire et permettant par conséquent une aération du produit, les plages continues offrant un support récepteur d'inscriptions informatives ou publicitaires.

Selon un autre développement du dispositif selon l'invention on utilise une couronne formant noyau intérieur d'extrusion 14 prolongé par une jupe 18 de modèle standard et telle que représentée à la figure 5.

Cette couronne prolongée à sa périphérie par la jupe de conformation 18 comporte, à proximité de son rebord périphérique le débouché des canaux respectivement de perforations et d'insufflation du coussin d'air.

On voit que les canaux de perforation du film 30 sont prévus avec des dimensions nettement supérieures aux canaux d'insufflation de coussin d'air.

Selon la figure 4, dans l'espace intérieur de cette couronne 14, viennent se loger la plaquette circulaire 35 munie de sa bague graphitée 38.

La couronne 14 comporte respectivement les premiers canaux 30 et les seconds canaux 30' disposés à sa périphérie et répartis selon un intervalle modulaire régulier.

Il suffit, lorsque l'on veut réaliser un film présentant une répartition voulue de plages respectivement perforées et continues d'obturer les canaux de perforation 30 dans les zones en regard des parties du film où la surface doit être laissée continue et non perforée ; dans ces conditions les canaux de perforation 30 sont rendus inactifs et le film extrudé en face de ces canaux ne subit pas l'effet de perforation ; par contre les canaux 30' ou canaux d'insufflation du coussin d'air sont laissés actifs et permettent le glissement du film sur la jupe de conformation 18.

## Revendications

1. Procédé pour l'extrusion d'une gaine de matière (17) thermoplastique sous forme d'un film tubulaire comportant des zones perforées, du type dans lequel le film venu d'extrusion et encore à l'état plastique est amené sur une jupe (18) traversée de canaux répartis sur son pourtour et communiquant avec une chambre intérieure (32) contenant un gaz sous pression, une partie des canaux (30) permettant d'insuffler de façon intermittente des premiers jets de gaz tel que l'air chaud avec des caractéristiques physiques, telles que la pression ou le débit, permettant de provoquer la perforation des zones du film destinées à être perforées, procédé caractérisé en ce qu'une autre partie des canaux (30') est prévue pour insuffler de façon intermittente des seconds jets de gaz ou air avec des caractéristiques physiques inférieures et telles que ces jets laissent pleines des zones du film destinées à rester pleines, ces seconds jets insufflant de l'air venant occuper l'interface entre le film et la paroi extérieure de la jupe, ce coussin d'air évitant le contact entre le film et ladite paroi, permettant ainsi l'écoulement du film continu le long de cette paroi.

2. Dispositif pour la mise en œuvre du procédé selon la revendication 1 et pour l'extrusion d'une gaine (17) de matière thermoplastique sous forme d'un film tubulaire comportant des plages ou parois prévues avec des perforations, alternant avec des plages ou parois formant une surface continue, le dispositif comportant une tête d'extrusion (10, 11) dirigée vers le bas et permettant la sortie d'un film tubulaire (17) étiré vers le bas, le noyau intérieur (11) de la tête d'extrusion étant prolongé à sa périphérie par une jupe (18) tronconique formant conformateur de dilatation dudit film tubulaire, et le noyau intérieur (11) comportant lui-même intérieurement une chambre (32) alimentée en air comprimé amené à la température appropriée, la jupe (18) comportant des canaux (30, 30') communiquant avec ladite chambre pneumatique intérieure (32) et débouchant sur la paroi périphérique de ladite jupe (18) immédiatement en aval de la fente (12) d'extrusion et à la sortie du film (17), la chambre intérieure (32) étant associée à un distributeur (35) apte à obturer de façon intermittente lesdits canaux, et le dispositif est caractérisé en ce qu'une partie des canaux ou canaux de perforation (30) sont prévus avec un diamètre supérieur à celui des autres canaux ou canaux de coussin d'air (30'), et les canaux de perforation (30) sont aptes à débiter un jet d'air provoquant la perforation du film (17), tandis que les canaux de coussin d'air (30') sont aptes à débiter un jet d'air de caractéristiques mécaniques inférieures aux jets débités par les canaux de perforation (30) et ne provoquant pas la perforation du film (17), cet air formant coussin entre le film et la paroi de la jupe (18), en facilitant l'écoulement du film (17) sur cette jupe.

3. Dispositif selon la revendication 2, caractérisé en ce que le rapport des diamètres des canaux de perforation (30) aux diamètres des canaux de coussin d'air (30') est compris entre 1,5 et 3, et de préférence voisin de 2.

4. Procédé selon la revendication 1, caractérisé en outre en ce qu'on utilise une jupe (18) formant conformateur de dilatation du film venu d'extrusion et comportant une pluralité de canaux répartis sur sa périphérie dont des canaux de perforation (30) sont destinés à insuffler lesdits premiers jets d'air et des canaux de coussin d'air (30') sont destinés à insuffler lesdits seconds jets d'air, lesdits canaux débouchant au niveau de la formation du film venu d'extrusion, la jupe constituant ainsi un noyau standard et indifférencié permettant l'extrusion d'un film tubulaire perforé sur l'ensemble de sa paroi par lesdits canaux de perforation (30), et permettant l'extrusion d'un film tubulaire comportant des zones perforées et des zones pleines en neutralisant par obturation les canaux de perforation dans les zones où l'on souhaite prévoir la formation d'une paroi pleine, seuls les canaux de coussin d'air (30') étant laissés actifs dans cette zone.

5. Filière standard apte à permettre la mise en œuvre du procédé selon la revendication 4, dans laquelle les canaux de perforation (30) et les canaux de coussin d'air (30') sont alternativement répartis à sa périphérie selon des intervalles réguliers.

## Claims

1. Process embodying the extrusion of a sheath of thermo-plastic material (17) in the form of a tubular film containing perforated sectors, type in which the film from extrusion and still in the plastic state is applied to a skirting (18) crossed through by ducts distributed over its circumference and communicating with an inner chamber (32) containing a pressurized gas, a part of the ducts (30) intermittently blowing initial jets of gas such as hot air with physical characteristics so that the pressure or flow rate cause perforation of the sectors of the film designed to be perforated, process characterized in that another sector of the ducts (30') is designed to intermittently blow second jets of gas or air with lower physical characteristics so that these jets leave unperforated the sectors of the film designed to remain unperforated, the second jets blowing the air occupying the interface between the film and the outer wall of the skirting. This air cushion avoiding contact between the film and the said walls, thus enabling the film to flow continuously along this wall.

2. Device in view of applying the process according to claim 1 and of the extrusion of a sheath (17) in thermo-plastic material in the form of a tubular film containing areas or walls designed to be with perforations, alternating with areas or walls forming a continuous surface, the device comprising an extrusion head (10, 11) facing downwards and providing for the output of a tubular film (17) extruded downwards, the lower core (11) of the extrusion head being extended on its circumference by a trunconical skirting (18) forming expansion conformater of the said tubular film, and the lower core (19) having itself inside a chamber (32) supplied with compressed air brought to the right temperature, the skirting (18) containing ducts (30, 38) communicating with the said interior compressed air chamber (32) and egressing on the peripheral wall of the said skirting (18) immediately below the extrusion slot (12) and output of the film (17), the inner chamber (32) being associated to a distributor (35) designed to blank off the said ducts intermittently, and the device is characterized in that a part of the ducts or perforation ducts (13) are designed with a diameter higher than that of the other ducts or air cushion ducts (30'), and the perforation ducts (30) are designed to deliver an air jet causing perforation of the film (17), whereas the air cushion ducts (30') are designed to deliver an air jet with lower mechanical characteristics than those delivered by the perforation ducts (30), and not perforating the film (17), this air forming cushion between the film and the wall of the skirting (18), thus facilitating the flow of the film (17) on this skirting.

3. Device embodied in claim 2, characterized in that the ratio of the diameters of the perforation ducts (30) to those of the air cushion ducts (30'), is between 1.5 and 3, preferably around 2.

4. Process embodied by claim 1, characterized further in that a skirting (18) is used forming expansion conformator of the film from extrusion and containing a number of ducts distributed over its circumference whereof the perforation ducts (30) are designed to blow the said initial air jets and the air cushion ducts (30') are designed to blow the said second air jets, the said ducts egressing on the formation of the film from extrusion, the skirting thus forming a standard and undifferentiated core providing for the extrusion of a perforated tubular film over the whole of its wall via the said perforation ducts (30), and the extrusion of a tubular film containing perforated sectors and unperforated sectors, neutralizing the perforation ducts, by blanking off, in the sectors where the formation of a solid wall is required, only the air cushion ducts (30') being left active in this sector.

5. Standard die designed to apply the process embodied by claim 4, in which the perforation ducts (30) and air cushion ducts (30') are distributed alternatively on its circumference along regular intervals.

**Ansprüche**

1. Verfahren zum Extrudieren einer Hülle aus einem thermoplastischen Stoff (17) in Form eines rohrförmigen Filmes mit gelochten Bereichen, bei welchem der vom Extrudieren kommende sich noch im plastischen Zustand befindende Film zu einer Schürze (18) geführt wird, welche durch auf ihren Umfang verteilten Kanäle durchquert wird und mit einer inneren Kammer (32), welche einen sich unter Druck befindendendes Gas enthält, in Verbindung steht, wobei ein Teil der Kanäle (30) es erlaubt, stossweise erste Gasstrahlen, wie warme Luft mit derartigen physikalischen Eigenschaften, das der Druck bzw. der Durchsatz die Durchlochung der zu durchlochenden Bereiche des Filmes erlaubt, einzublasen, dadurch gekennzeichnet, dass ein weiterer Teil der Kanäle (30') vorgesehen ist, um stossweise zweite Gas- bzw. Luftstrahlen mit geringeren physikalischen Eigenschaften, die so gestaltet sind, dass diese Strahlen die nicht zu durchlochenden Bereiche des Filmes nicht durchlochen, einzublasen, wobei diese zweiten Strahlen Luft einblasen, die den Zwischenraum zwischen dem Film und der äusseren Wand der Schürze einnimmt, wobei dieses Luftkissen einen Kontakt zwischen dem Film und dieser Wand vermeidet, wodurch der Ablauf des durchgehenden Filmes entlang dieser Wand gewährleistet ist.

2. Vorrichtung zum Einsatz des Verfahrens gemäss dem Anspruch 1 und zum Extrudieren einer Hülle (17) und thermoplastischem Stoff in Form eines rohrförmigen Filmes mit gelochten Bereichen bzw. Wänden, die abwechseld durch Bereiche bzw. Wände mit durchgehender Fläche ersetzt werden, wobei die Vorrichtung einen nach unten gerichteten und das Herausführen eines nach unten gezogenen rohrförmigen Filmes (17) erlaubenden Extrudierkopf (10, 11) umfasst, wobei der innere Kern (11) des Extrudierkopfes um seinen Umfang herum durch eine kegelstumpfartige Schürze (18), die als Dehnungsschrumpfvorrichtung für diesen rohrförmigen Film dient, verlängert wird und wobei der innere Kern (11) wiederum im Innern eine Kammer (32), die mit zu einer angemessenen Temperatur gebrachten Druckluft versorgt wird, bildet, wobei die Schürze (18) mit Kanälen (30, 30') versehen ist, die mit dieser inneren pneumatischen Kammer (32) in Verbindung stehen und an der ringförmigen Wand dieser Schürze (18) sofort vor dem Schlitz (12) zum Extrudieren und am Ausgang des Filmes (17) ankommen, wobei die innere Kammer (32) mit einem Verteiler (35) verbunden ist, der diese Kanäle mit Unterbrechungen schliessen kann, dadurch gekennzeichnet, dass ein Teil der Kanäle bzw. Durchlochungskanäle (30) mit einem grösseren Durchmesser als derjenige der weiteren Kanäle bzw. Luftkissenkanäle (30') vorgesehen sind und das die Durchlochungskanäle (30) einen Luftstrahl abgeben können, der die Durchlochung des Filmes (17) verursacht, während die Luftkissenkanäle (30') einen Luftstrahl mit geringeren mechanischen Eigenschaften als die durch die Durchlochungskanäle (30) abgegebenen Strahlen abgeben können, welcher keine Durchlochung des Filmes (17) verursacht, wobei diese Luft ein Kissen zwischen dem Film und der Wand der Schürze (18) bildet und dadurch den Durchlauf des Filmes (17) an dieser Schürze erleichtert.

3. Vorrichtung gemäss dem Anspruch 2, dadurch gekennzeichnet, dass das Verhältnis zwischen den Durchmessern der Durchlochungskanäle (30) und den Durchmessern der Luftkissenkanäle (30') zwischen 1,5 und 3 liegt, und vorzugsweise in der Nähe von 2.

4. Verfahren gemäss dem Anspruch 1, darüberhinaus dadurch gekennzeichnet, dass eine Schürze (18) Anwendung findet, welche als Dehnungsschrumpfvorrichtung des vom Extrudieren kommenden Filmes dient und eine Mehrzahl an um den Umfang herum verteilten Kanäle umfasst, wobei Durchlochungskanäle (30) zum Einblasen der genannten ersten Luftstrahlen und Luftkissenkanäle (30') zum Einblasen der genannten zweiten Luftstrahlen bestimmt sind, wobei die genannten Kanäle auf der Ebene der Bildung des vom Extrudieren kommenden Filmes ankommen, wobei die Schürze auf diese Weise einen nicht differenzierten Standardkern bildet, der das Extrudieren eines rohrförmigen über die genannten Durchlochungskanäle (30) über die gesamte Wand gelochten rohrförmigen Film ebenso wie das Extrudieren eines rohrförmigen Filmes mit gelochten Bereichen und mit nicht gelochten Bereichen, wobei die Durchlochungskanäle in den Bereichen, wo eine volle Wand gewünscht wird, durch Verschliessen neutralisiert werden, wobei lediglich die Luftkissenkanäle (30') in diesem Bereich aktiv bleiben, erlaubt.

5. Standard-Spritzmundstück zum Einsatz des Verfahrens gemäss dem Anspruch 4, in welchem die Durchlochungskanäle (30) und die Luftkissenkanäle (30') abwechselnd in gleichmässigen Abständen um den Umfang herum verteilt sind.

0 013 638

Fig.1

Fig.3

## Fig. 2

Fig:4

Fig:5

0 013 638

3